# EUROPEAN PATENT APPLICATION

(11) **EP 0 829 789 A1**
(43) Date of publication of application: **18.03.1998**
(21) Application number: 97902582.2
(22) Date of filing: 05.02.1997
(51) Int. Cl.: G05B 19/414

(54) **PARAMETER SETTING METHOD FOR CNC MACHINE**

(30) Priority: 05.02.1996 JP 40285/96
(71) Applicant: FANUC LTD., Minamitsuru-gun, Yamanashi 401-05 (JP)
(72) Inventor: OTSUKI, Toshiaki, Minamitsuru-gun, Yamanashi 403 (JP); HAGA, Makoto, Fanuc Manshonharimomi, Minamitsuru-gun, Yamanashi 401-05 (JP)
(74) Representative: Billington, Lawrence Emlyn
(86) International application number: JP9700277
(87) International publication number: WO9728493

(57) **Abstract**

The values of parameters required to be set or changed, of the CNC machine side, are stored in a ROM (2) on the expanded capability board (1) additionally mounted. The parameter values uniquely determined according to the kind of the expanded capability board (1) are directly read out from the ROM (2) and automatically written in a hard disk (75). The set values (the standard set values) of the parameters stored in the ROM (2) are displayed on the screen, they are corrected by using the displayed values as guide lines, and the parameters corrected according to the characteristics of the CNC machine are written in the hard disk (75).

## Description

### Technical Field

The present invention relates to setup and change of parameter values on the side of a CNC apparatus that are required when a function expanding board is incorporated in the CNC apparatus.

### Background Art

It is a common practice to incorporate a function expanding board into a CNC apparatus in order to improve the functions of the CNC apparatus. In many cases, some of parameters of the CNC apparatus needs to be set and changed depending on the type of the function expanding board.

Conventionally, these parameters used to be set and changed manually by an operator with reference to specifications, manual or the like attached to the function expanding board. Accordingly, parameter setup errors and other problems could have been occurred. Furthermore, in the case where there are a large number of parameters to be set or changed, operation for setting or changing such parameters takes a long time, during which a machine tool cannot be used, thereby giving rise to a problem such as the fall of operating efficiency of the machine tool.

### Disclosure of the Invention

The object of the present invention is to provide a parameter setup method for a CNC apparatus, in which operations for setting and changing necessary parameters for the incorporation of a function expanding board can be finished in a short time without involving setup errors.

In order to achieve the above object, according to the present invention, there is provided a CNC apparatus designed so that a function expanding board for providing an additional function can be incorporated into the body of the CNC apparatus and the additional function is provided by a joint function of the CNC apparatus and the function expanding board; wherein storage means of the function expanding board is previously stored with the values of parameters of the CNC apparatus whose set values are settled depending on the function expanding board, a list of parameters of the CNC apparatus whose set values should be changed depending on the machine type, and standard set values of the individual parameters, the values of the parameters whose set values are settled depending on the function expanding board, the list of the parameters whose set values should be changed depending on the machine type, and the standard set values of the individual parameters are read from the incorporated function expanding board; the list of the parameters whose set values should be changed depending on the machine type and the standard set values of the individual parameters are displayed on a display screen; the values of the parameters whose set values are settled depending on the function expanding board in the CNC apparatus body are automatically set, while the parameters, whose set values should be changed depending on the machine type, are automatically set in the CNC apparatus body after the parameter values are checked and modified.

### Brief Description of the Drawings

FIG. 1 is a block diagram schematically showing a CNC apparatus to which a parameter setup method according to the present invention is applied;
FIG. 2 is a conceptual diagram showing a function expanding board to which the parameter setup method according to the present invention is applied;
FIG. 3 is a flowchart showing an outline of a process for reading contents of a memory of the function expanding board of FIG. 2 and storing them in a hard disk in a stage preceding a parameter setup process;
FIG. 4 is a flowchart showing an outline of a process for setting parameters by modifying some of the parameters stored in the process of FIG. 3 and storing them in the hard disk after the process of FIG. 3 is executed;
FIG. 5 shows an outline of a picture displayed at the start of modifying operation of FIG. 4;
FIG. 6 shows an outline of a picture displayed during the modifying operation of FIG. 4; and
FIG. 7 shows an outline of a picture displayed during the modifying operation of FIG. 4.

### Best Mode for Carrying Out the Invention

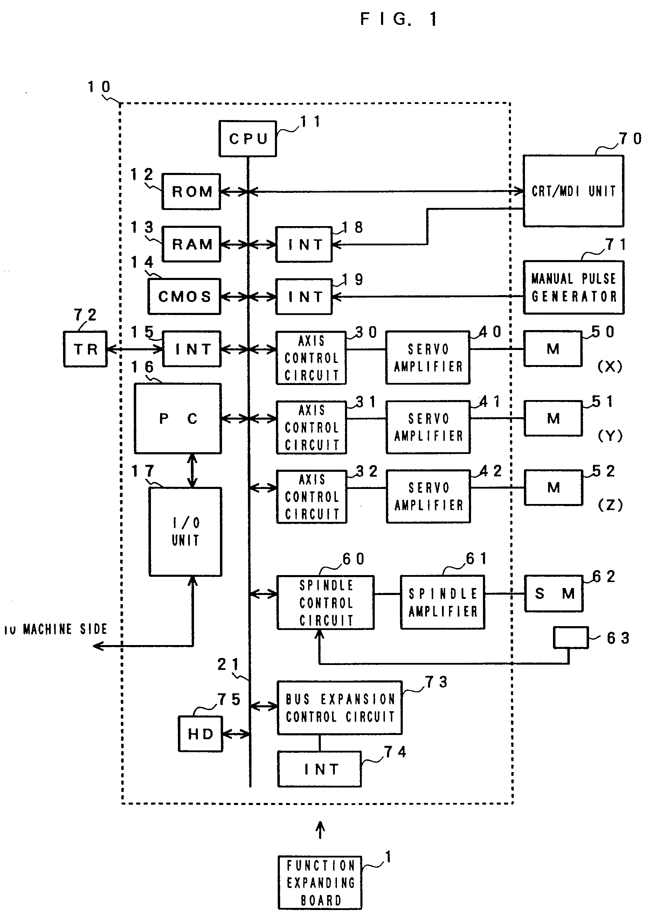

Referring first to the block diagram of FIG. 1, an outline of a CNC apparatus (numerical control apparatus) 10 to which a parameter setup method according to the present invention is applied will be described.

A CPU 11 is a processor for generally controlling the CNC apparatus, and reads out a system program stored in a ROM 12 through a bus 21. General control of the CNC apparatus 10 is executed according to this system program. A memory 13 is stored with temporary calculation data, display data, etc. A CMOS memory 14 is backed up by a battery (not shown), and is constructed as a nonvolatile memory whose storage is retained even after the power supply to the CNC apparatus 10 is turned off.

When the CNC apparatus is connected to the power source, an activating program stored in the ROM 12 starts automatically. Thereupon, the CPU 11 temporarily loads the memory (RAM) 13 with system software, various application programs, etc., stored in a hard disk 75 and the like, and starts to execute the contents written in the memory 13.

Executing the system software and application programs requires set values of various parameters. These parameter values are stored in a parameter storage memory section of the hard disk 75. As the system software, various application programs, etc. are read from the hard disk 75, the various parameters are also read from the hard disk 75, and the parameters, along with the system software, various application programs, etc., are read by the memory 13 and loaded together into a parameter storage region of the memory 13. The set values of the parameters stored in the parameter storage memory section of the hard disk 75 can be rewritten, for example, by keyboard operation through a CRT/MDI unit 70.

An interface 15 is an interface for external equipment, and can be connected with an external apparatus 72, such as a paper tape reader, paper tape puncher, paper tape reader/paper tape puncher, or floppy disk drive. A machining program is read from the paper tape reader or a floppy disk. Also, a machining program edited in the CNC apparatus 10 can be outputted to the paper tape puncher or floppy disk.

A PC (programmable controller) 16 controls various CNC machine tools, such as a CNC lathe, CNC milling machine, etc., by means of sequence programs incorporated into the CNC apparatus 10. More specifically, functions commanded by the machining program are converted into signals required on the CNC machine tool side in accordance with these sequence programs, and are delivered to the CNC machine tool side through an I/O unit 17. Various actuators on the CNC machine tool side are activated in response to these output signals. Further, on receiving signals from a limit switch on the CNC machine tool side and various switches on a machine control panel, the PC 16 processes these signals as required, and delivers them to the CPU 11.

Image signals, such as the respective present positions of individual axes, alarms, image data, etc., are fed to a display device of the CRT/MDI unit 70 and displayed thereon. An interface 18 receives data from a keyboard in the CRT/MDI unit 70 and delivers them to the CPU 11. An interface 19 is connected to a manual pulse generator 71, and receives pulses from the manual pulse generator 71. The manual pulse generator 71 is installed in the machine control panel on the CNC machine tool side, and is used for manual precision positioning of the movable parts of a machine.

Axis control circuits 30, 31 and 32 receive move commands for the individual axes (X-, Y- and Z-axes) from the CPU 11, and outputs the commands to servo amplifiers 40, 41 and 42, respectively. On receiving these commands, the servo amplifiers 40, 41 and 42 drive table feed servomotors 50, 51 and 52 for the individual axes, respectively. The servomotors 50, 51 and 52 have built-in detectors (not shown) for position/speed detection, respectively, and position and speed feedback signals from these detectors are fed back to the axis control circuits 30, 31 and 32. Servo control CPU's (not shown) built in the axis control circuits 30, 31 and 32 individually carry out position-loop and speed-loop processing in accordance with these feedback signals and the aforesaid move commands; further, they carry out current-loop processing, obtain current commands for final drive control of the individual axes, and control the servomotors 50, 51 and 52 of the individual axes.

A spindle control circuit 60 receives a spindle rotation command, spindle orientation command, etc., and delivers a spindle speed signal to a spindle amplifier 61. On receiving this spindle speed signal, the spindle amplifier 61 causes a spindle motor 62 to rotate at a commanded rotational speed. Further, in response to the orientation command, the rotational position of the spindle motor 62 is set to a predetermined position.

A spindle is coupled to the spindle motor 62 by means of gears or a belt, and a position coder 63 is coupled to this spindle. Thus, the position coder 63 rotates in synchronism with the spindle, and outputs feedback pulses. These feedback pulses are fed back to the spindle control circuit 60, whereby speed control and position control of the spindle motor 62 are effected.

The hardware of the CNC apparatus 10 and the arrangement of the CNC machine tools are similar to the conventional ones. According to the present embodiment, however, an interface 74 (expansion slot) is connected to the bus 21 of the CNC apparatus 10 through a bus function expansion circuit 73, whereby a function expanding board' 1 for making available additional functions of the CNC apparatus 10.

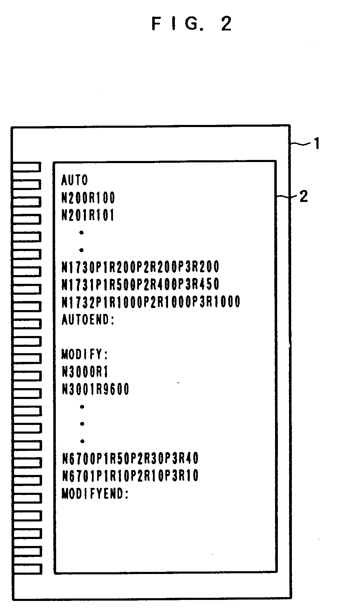

The function expanding board 1 is shown in the conceptual diagram of FIG. 2. The function expanding board 1 is composed of a plurality of connecting terminals for bus-connection to the interface 74 and a printed board that is mounted with various electrical components and a ROM 2 for use as storage means. Depending on the type of the function expanding board 1, various additional functions can be made available by installing the function expanding board 1 in the CNC apparatus 10. A user selects the function expanding board 1 in accordance with his intended function, and attaches it to the CNC apparatus 10.

The kinds of the parameters on the side of the CNC apparatus 10, which must be set or changed for the installation of the function expanding board 1, and set values for the various parameters are previously stored in the form of character codes according to ASCII, EIA, ISO, etc., in specific regions of the ROM 2 of the function expanding board 1.

The kinds of the parameters on the side of the CNC apparatus 10, which must be set or changed for the installation of the attachment of the function expanding board 1, are stored in the form of identification numbers (parameter numbers) in specific storage regions of the ROM 2 of the function expanding board 1. The set values of the parameters of the kinds specified by these numbers and remarks thereon are stored in association with the parameter numbers in specific storage regions of the ROM 2. Alternatively, however, the remarks may be stored in association with the parameter numbers in the ROM 12 on the side of the CNC apparatus 10 or the like, not in the ROM 2.

In general, set values of parameters may be classified into two categories; that is, those to be settled automatically when the type of the function expanding board 1 is fixed and those to be changed by an operator, depending on the types and models of the CNC machine tools even when the standard values are determined in advance.

Referring now to FIG. 2, there will be described an example of a form in which the ROM 2 of the function expanding board 1 is stored with the numbers for specifying the kinds of the parameters and the set values of the parameters specified by those numbers.

In a statement on each line in the ROM 2 of FIG. 2, figures that follow symbol N represent a parameter number, and figures that follow symbol R represent a set value. For example, "N200R100" on a second line indicates that a parameter value 100 is set for a parameter of number 200. Further, parameters of specific numbers can be given set values, individually, with respect to a plurality of axes. In this case, each figure that follows P represents the number of each corresponding axis. In the case of FIG. 2, for example, "N1731P1R500P2R400P3R450" indicates that parameter values 500, 400 and 450 are set for a parameter of number 1731 with respect to first, second, and third axes, respectively.

Some consecutive lines of statements of these parameters are interposed between statements "AUTO" and "AUTOEND" or between "MODIFY" and "MODIFYEND".

It is recognized that the contents of the parameter statements interposed between "AUTO" and "AUTOEND" should be automatically set, as they are on the side of the CNC apparatus 10. On the other hand, it is recognized that the contents (standard set values) of the parameter statements interposed between "MODIFY" and "MODIFYEND" should be set, as they are, in response to the operator's command, or at least some of them should be set after being modified by the operator.

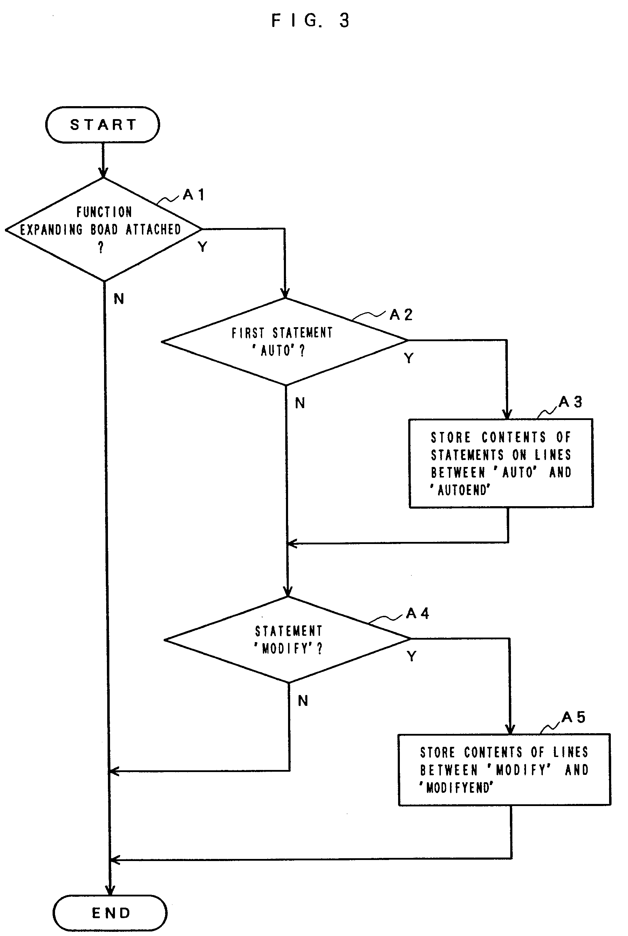

When the power is turned on to boot up the system, the CPU 11 starts the processing shown in the flowchart of FIG. 3 according to the activating program in the ROM 12 before the parameters start to be transferred from the parameter storage memory section of the hard disk 75 to the parameter storage region of the memory 13.

First, the CPU 11 determines whether or not the function expanding board 1 is installed in the interface 74 (Step A1). This determination will be possible in the case where a terminator is previously mounted on the function expanding board 1 so that a terminator signal can be obtained only when it is installed in the interface 74.

When the CPU 11 recognizes the attachment of the function expanding board 1, it accesses the ROM 2 of the function expanding board 1 through the interface 74, reads a statement on a first line in its predetermined region, and determines whether or not the content of the statement is "AUTO" (Step A2).

When the content is "AUTO", the CPU 11 reads statements related to the parameter setup line after line until the line of "AUTOEND" is read, and writes each time their contents into the predetermined region (parameter storage memory section) of the hard disk 75 (Step A3). That is, the hard disk 75 is automatically set, in its regions corresponding to the numbers of the statements that follow N, with numerical values, that follow R, as parameter values (with respect to the axes of the numbers that follow P).

As described above, when the CPU 11 reads the line "AUTOEND" after writing in the predetermined region of the hard disk 75 the contents of the statements between "AUTO" and "AUTOEND" of the ROM 2 of the function expanding board 1, the CPU 11 determines whether or not the statement on the next line is "MODIFY" (Step A4). Even when it is concluded in Step A2 that the statement on the first line read immediately after the attachment of the function expanding board 1 is not "AUTO", the CPU 11 determines in this step (Step A4) whether or not the statement on the next line is "MODIFY".

If the statement is "MODIFY", the CPU 11 reads the statements related to the parameter setup line after line until the line of "MODIFYEND" is read, and loads each time their contents into the predetermined region (parameter storage memory section) of the hard disk 75 (Step A5). In this step, the statements are read and written into the predetermined region of the hard disk 75 in the same manner as in Step A3 mentioned before.

As described above, when the CPU 11 reads the line of "MODIFYEND" after writing in the predetermined region of the hard disk 75 the contents (as standard set values) of the statements between "MODIFY" and "MODIFYEND" of the ROM 2 of the function expanding board. 1, this processing is finished. Further, when "MODIFY" is not found in the process of Step A4, this processing is also finished in this step.

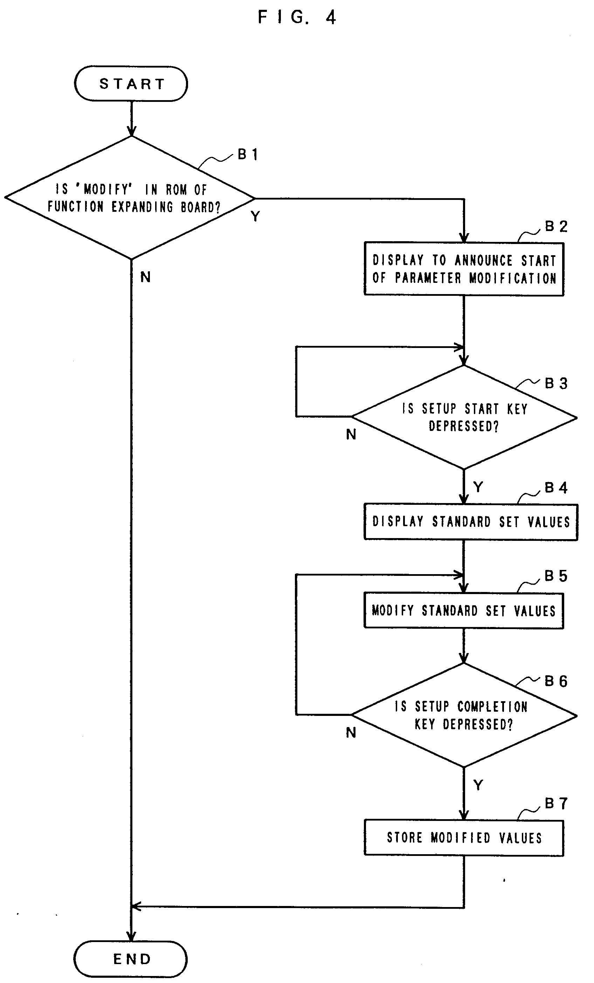

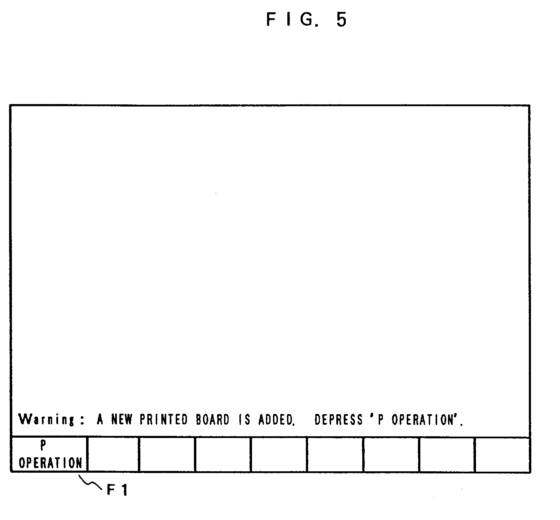

When the processing shown in FIG. 3 is finished in this manner, the CPU 11 executes the processing shown in FIG. 4. First, the function expanding board 1 is attached anew, and it is determined whether or not there is the statement "MODIFY" in the ROM 2 of this function expanding board 1. When there is no "MODIFY", this processing is finished. When there is "MODIFY", the CPU 11 first causes the display of the CRT/MDI unit 70 to display (Step B2) a warning picture (see FIG. 5) that is previously stored in the ROM 12, whereupon it waits for the operator's manual input operation (Step B3).

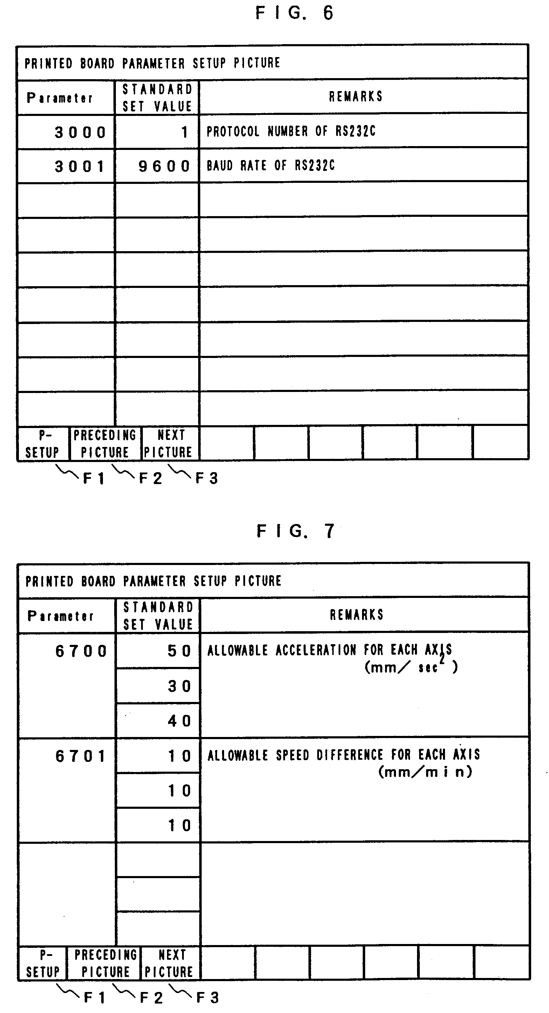

When the operator then operates a function key F1 (see FIG. 5) of the CRT/MDI unit 70, which is currently made to function as a setup start key, the CPU 11 detects this operation in the discrimination process of Step B3, and displays a first parameter setup picture such as the one shown in FIG. 6 (Step B4). Then, the CPU 11 reads statements of the ROM 2, and displays the numbers (parameter numbers) that follow N of the individual statements between "MODIFY" and "MODIFYEND", numerical values (parameter values) that follow R of the statements, and remarks, such as descriptions of the parameters of the statements, in columns "parameter", "standard set values", and "remarks", respectively. In the case where parameter values are given individually to a plurality of axes (numbers that follow P) that are related to one parameter number, the parameter setup picture will be as shown in FIG. 7. In FIG. 7, one line of "parameter" corresponds to "standard set values" that are as many as the number of axes (three in number in the example of FIG. 7).

Therefore, referring to the parameter picture shown in FIG. 6 or 7, the operator determines whether or not to modify the parameter values that are displayed as the standard set values for the individual lines, and modifies only those values which require to be changed (Step B5). Determination as to whether or not these standard set values should be changed to other values depends on how the types and models of the CNC machine tools, individual differences among the CNC machines, the characteristics of the spindle motor, servomotor etc. differ from those on which these standard set values are based.

These parameter values are changed by picking out standard set values to be modified by means of a cursor and numerically inputting modified values through the keyboard. The parameter values modified for individual items are successively stored in a buffer (not shown), corresponding to the individual parameter numbers or combinations of the parameter numbers and the axes.

While the picture shown in FIG. 6 or 7 is displayed, the function of the function key F1 is changed from that of the setup start key to that of a setup completion key. When the operator has concluded that modifying operation for all the parameters that require modification of their standard set values is finished, he depresses the function key F1. Thereupon, the CPU 11 detects the depression of the function key F1 (Step B6), and transfers the contents stored in the aforesaid buffer to the hard disk 75, thereby loading them into the parameter storage memory section thereof (Step B7). Among the standard set values corresponding to the individual parameter numbers having so far been stored (Step A5 of FIG. 3) in the parameter storage memory section of the hard disk 75, the standard set values of the parameter numbers modified in Step B5 serve as modified set values. The unmodified standard set values serve directly as set values.

According to the embodiment described above, all the values of the parameters specified by the ROM 2 of the function expanding board 1 are once written into the hard disk 75. Then, those parameter values which require modification, among those written in the hard disk 75, are manually modified and written again into the hard disk 75. Thereafter, the parameter values (set values) stored in the hard disk 75 are transferred to the memory 13 of the CNC apparatus 10.

However, in the case where the execution of the programs by the CNC apparatus 10 and the operation of the CNC machine tools are compulsorily stopped in order to attach the function expanding board 1, new parameter set values may be written directly into the parameter storage region of the memory 13 when installing a function expanding board 1.

According to the embodiment described above, the setup of the parameters shown in FIG. 3 and the modification of the parameters shown in FIG. 4 are carried out every time the system is booted up. Before the function expanding board 1 is replaced, however, these processes need not be carried out every time the system is booted up.

Every time the system is booted up, therefore, the CPU 11 determines whether or not the function expanding board 1 is attached to the interface 74 (see Step A1 of FIG. 4) and also discriminates the type of the attached function expanding board 1. As a result of this, determinations are possible as to whether or not parameter setup processes shown in FIGS. 3 and 4 had carried out and the parameters have already been set on the side of the CNC apparatus 10 or as to whether or not parameter setup process has to be carried out now. These determinations could avoid repeated parameter setup operations.

For enabling this discrimination of the type of the function expanding board 1, the contents (all the data shown in FIG. 2) of the ROM 2 are saved beforehand in the nonvolatile memory 14 of the CNC apparatus 10 when the function expanding board 1 is first installed. Thereafter, in an initial stage of system booting, the contents of the ROM 2 of the then installed function expanding board 1 are fetched and compared with the contents of the ROM 2 previously saved in the nonvolatile memory 14; these contents are checked for identity, and only in the case where the contents are concluded to be identical, the parameter setup processes shown in FIGS. 3 and 4 can be omitted.

Further, in order to discriminate the type of the function expanding board 1, a code (function expanding board identification code) for identifying the type of the function expanding board 1 may previously be written in the ROM 2 and saved in the nonvolatile memory 14 so that identification codes can be compared, instead of saving in the nonvolatile memory 14 all data that are written in the ROM 2.

Further, instead of writing all the data for parameter setup (parameter set values and standard set values) and the aforesaid mechanism expansion code identification code into the ROM 2 of the function expanding board 1, only the mechanism expansion code identification code may be written into the ROM 2 so that the ROM 12 of the CNC apparatus 10 or the hard disk 75 can be stored with the parameter setup data, corresponding to the mechanism expansion code identification code. In this case, the CPU 11 first reads the function expanding board identification code, then reads the parameter set values and the standard set values from the ROM 12 or the hard disk 75 using the function expanding board identification code as a key, and carries out entirely the same processes as the aforesaid ones shown in FIGS. 3 and 4.

## Claims

1. In a CNC apparatus designed so that a function expanding board for providing an additional function can be additionally attached to the body of the CNC apparatus and said additional function is attained by a joint function of the CNC apparatus body and the function expanding board,
a parameter setup method for the CNC apparatus, comprising steps of:
previously storing storage means on said function expanding board with the values of parameters on the CNC apparatus body side expected to be set or changed on account of the attachment of the function expanding board; and
reading said values from the attached function expanding board and setting the same in the CNC apparatus body.

2. A parameter setup method for a CNC apparatus according to claim 1, wherein said CNC apparatus automatically reads said parameter values from the previously attached function expanding board and automatically sets the same in the CNC apparatus body in an initialization process for booting up the CNC apparatus.

3. In a CNC apparatus designed so that a function expanding board for providing an additional function can be additionally attached to the body of the CNC apparatus and said additional function is attained by a joint function of the CNC apparatus body and the function expanding board,
a parameter setup method for the CNC apparatus, comprising steps of:
previously storing storage means on the CNC apparatus body side with the values of parameters on the CNC apparatus body side expected to be set or changed on account of the attachment of the function expanding board;
specifying the type of said function expanding board by identification data in the attached function expanding board; and
reading the parameter values corresponding thereto from said storage means and setting the same in the CNC apparatus body.

4. A parameter setup method for a CNC apparatus according to claim 3, wherein said CNC apparatus automatically reads said identification data from the previously attached function expanding board, thereby specifying the type of the function expanding board, and automatically sets the parameter values corresponding thereto in the CNC apparatus body, in an initialization process for booting up the CNC apparatus.

5. In a CNC apparatus designed so that a function expanding board for providing an additional function can be additionally attached to the body of the CNC apparatus and said additional function is attained by a joint function of the CNC apparatus body and the function expanding board,
a parameter setup method for the CNC apparatus, comprising steps of:
automatically reading, by means of the CNC apparatus, a list of parameters expected to be set or changed on account of the attachment of the function expanding board and standard set values of the individual parameters from the previously attached function expanding board and displaying the same on a display screen; and
automatically setting said parameter values in the CNC apparatus body after checking and modifying of them.

6. In a CNC apparatus designed so that a function expanding board for providing an additional function can be additionally attached to the body of the CNC apparatus and said additional function is attained by a joint function of the CNC apparatus body and the function expanding board,
a parameter setup method for the CNC apparatus, comprising steps of:
previously storing storage means on said function expanding board with the values of parameters on the CNC apparatus body side whose set values are settled depending on the function expanding board, a list of parameters on the CNC apparatus body side whose set values should be changed depending on the machine type, and standard set values of the individual parameters;
reading, from the attached function expanding board, the values of the parameters whose set values are settled depending on the function expanding board, the list of the parameters whose set values are changed depending on the machine type, and the standard set values of the individual parameters;
displaying on a display screen the list of the parameters whose set values should be changed depending on the machine type and the standard set values of the individual parameters;
automatically setting in the CNC apparatus body the values of the parameters whose set values are settled depending on the function expanding board; and
automatically setting in the CNC apparatus body the parameters whose set values should be changed depending on the machine type after checking and modifying said parameter values.

7. In a CNC apparatus designed so that a function expanding board for providing an additional function can be additionally attached to the body of the CNC apparatus and said additional function is attained by a joint function of the CNC apparatus body and the function expanding board,
a parameter setup method for the CNC apparatus, comprising steps of:
previously storing storage means on the CNC apparatus body side with the values of parameters on the CNC apparatus body side whose set values are settled depending on the function expanding board, a list of parameters on the CNC apparatus body side whose set values should be changed depending on the type of the function expanding board and the machine type, and standard set values of the individual parameters;
discriminating the type of said function expanding board by identification data on the attached function expanding board;
reading the values of the parameters whose set values are settled depending on the function expanding board, the list of the parameters whose set values should be changed depending on the type of the function expanding board and the machine type, and the standard set values of the individual parameters;
displaying the list of the parameters whose set values should be changed depending on the type of the function expanding board and the machine type and the standard set values of the individual parameters on a display screen;
automatically setting in the CNC apparatus body the values of the parameters whose set values are settled depending on the function expanding board; and
automatically setting in the CNC apparatus body the parameters whose set values should be changed depending on the type of the function expanding board and the machine type after checking and modifying said parameter values.

8. In a function expanding board attached to a CNC apparatus body in order to give an additional function thereto, said function expanding board having a memory installed therein, the memory being loaded with statements related to the numbers of parameters to be set on the side of said CNC apparatus body and changed on account of the attachment of the function expanding board to the CNC apparatus body side and the values of the parameters specified by the numbers, so that it can be determined whether the value of the parameter in each said statement should be automatically set depending on the function expanding board or whether the value is a one for reference for setup and can be modified.

9. A parameter changing system for a CNC apparatus, comprising:
a function expanding board having therein a memory loaded with statements related to the values of parameters and adapted to be attached to a CNC apparatus body in order to give an additional function thereto, the statements being related to the numbers of parameters to be set on the side of said CNC apparatus body and changed on account of the attachment of the function expanding board to the CNC apparatus body side and the values of the parameters specified by the numbers, so that it can be determined whether the value of the parameter in each said statement is in a first category for the value to be automatically set depending on the function expanding board or whether the value is one for reference for setup belonging to a second category for the modifiable value;
a parameter storage device for storing the numbers of the parameters to be set on the side of said CNC apparatus body and changed on account of the attachment of the function expanding board to the CNC apparatus body side and the values of the parameters specified by the numbers;
a display device with manual input means capable of reading and displaying only the statements in the second category, among those written in the memory of said function expanding board, and modifying the values of the displayed parameters; and
parameter value changing means for delivering the parameter values modified by said display device with manual input means to said parameter storage device and changing the parameter values corresponding to said parameter numbers, having previously been stored in the storage device, into the modified values.
